# EUROPEAN PATENT APPLICATION

(11) **EP 4 617 650 A1**
(43) Date of publication of application: **17.09.2025**
(21) Application number: 23888027.2
(22) Date of filing: 08.11.2023
(51) Int. Cl.: G01N 27/407

(54) **FLEXIBLE ELECTROLYTE, PREPARATION METHOD THEREFOR AND APPLICATION THEREOF**

(30) Priority: 09.11.2022 CN 202211399750; 03.11.2023 CN 202311459815
(71) Applicant: Zhengzhou Winsen Electronics Technology Co., Ltd, Zhengzhou, Henan 450001 (CN)
(72) Inventor: GU, Ruiqin, Zhengzhou, Henan 450001 (CN); LIU, Hongxia, Zhengzhou, Henan 450001 (CN); WANG, Yingjie, Zhengzhou, Henan 450001 (CN); HAO, Mingliang, Zhengzhou, Henan 450001 (CN); GAO, Guanghui, Zhengzhou, Henan 450001 (CN); HAN, Jing, Zhengzhou, Henan 450001 (CN); YANG, Yang, Zhengzhou, Henan 450001 (CN); LEI, Tonggui, Zhengzhou, Henan 450001 (CN)
(74) Representative: Nordmeyer, Philipp Werner
(86) International application number: PCT/CN2023/130340
(87) International publication number: WO 2024/099338

(57) **Abstract**

The present invention provides a preparation method for a flexible electrolyte, the specific steps comprising: dissolving, forming and drying a polymer containing a polar group to prepare a polymer frame, and soaking the polymer frame using an ionic liquid having a dissolved transition metal salt until an absorption equilibrium is reached, to obtain a flexible electrolyte; the polymer containing the polar group comprises a carboxyl-containing polymer, a hydroxyl-containing polymer and a cyano-containing polymer. The flexible electrolyte may be used in the preparation of an integrated electrode and electrolyte, and the preparation of an ammonia gas electrochemical gas sensor. The ammonia gas electrochemical gas sensor is a non-consumable ammonia gas electrochemical sensor, and since an integrated electrode electrolyte structure is utilized, miniaturization of the ammonia gas sensor is achieved without affecting the gas response speed of the electrochemical sensor, and, as the ammonia gas electrochemical gas sensor is a non-consumable ammonia gas electrochemical sensor, costs are reduced.

## Description

This application claims the priority to Chinese Patent Application No. 202211399750.1 filed on November 9, 2022 with the China National Intellectual Property Administration and Chinese Patent Application No. 202311459815.1 filed on November 3, 2023 with the China National Intellectual Property Administration, which are incorporated herein by reference in their entirety.

### FIELD

The present disclosure relates to the technical field of sensors, and in particular to a flexible electrolyte and a preparation method and application thereof.

### BACKGROUND

Electrochemical ammonia gas sensors are common devices for detecting gas concentrations. Their working principle is that when ammonia gas diffuses to the working electrode, it loses electrons at the solid-liquid-gas three-phase interface and undergoes an oxidation reaction to generate N₂/NOₓ, generate migration ions or change the composition of the electrolyte, resulting in the active substances in the electrolyte receiving electrons at the counter electrode and undergoing a reduction reaction. The magnitude of the electrical signal generated by the entire reaction is directly proportional to the ammonia gas concentration, so the ammonia gas content in the environment can be quantitatively measured by using the magnitude of the electrical signal of the ammonia gas sensor. In order to avoid the volume change of electrolyte under different humidity, the existing ammonia gas sensor usually uses non-volatile ionic liquid as the main component of electrolyte, but this still does not solve the problems of liquid leakage and case bursting. At the same time, in order to make it have an ideal response signal, a variety of ionic liquids and graphene are often added to the electrolyte, which results in a high cost of ammonia gas sensors.

In order to reduce the cost and solve the problems of liquid leakage and case bursting, a flexible solid electrolyte, such as ionic liquid gel, has been used as the electrolyte of ammonia gas sensor in the existing research. The principle is that an ionic liquid containing an unsaturated chemical bond is used as a monomer, which is polymerized and formed into a three-dimensional network through the interaction between molecular chains to obtain a flexible material, and the ionic liquid is fixed in the electrolyte through interaction, so that the problem of liquid leakage and case bursting can be eliminated. However, ammonia gas sensors made by the common preparation methods of the flexible electrolyte are bulky and difficult to be miniaturized.

### SUMMARY

In order to achieve the above-mentioned objectives, the technical solution according to the present disclosure is to provide a method for preparing a flexible electrolyte, which comprises the following specific steps: dissolving, forming and drying a polymer containing a polar group to obtain a polymer frame, and soaking the polymer frame using an ionic liquid having a dissolved transition metal salt until an absorption equilibrium is reached, to obtain the flexible electrolyte;

the polymer containing a polar group includes a carboxyl-containing polymer, a hydroxyl-containing polymer and a cyano-containing polymer.

Based on the above, the mass ratio of the polymer containing a polar group, the ionic liquid and the transition metal salt is 100:(20-80):(0.02-16).

Based on the above, the polymer containing a polar group includes hydroxyethyl cellulose, hydroxypropyl cellulose, cellulose acetate, PAA and PMAA.

Based on the above, the transition metal salt includes an inorganic salt which contains Mn²⁺, Cu²⁺, Ni²⁺, Zn²⁺, Ag⁺, or Co²⁺ and is capable of performing a reversible coordination interaction with NH₃.

Based on the above, the ionic liquid is 1-ethyl-3-methylimidazolium thiocyanate, 1-propyl-3-methylimidazolium thiocyanate, 1-butyl-3-methylimidazolium thiocyanate, 1-hexyl-3-methylimidazolium thiocyanate, 1-octyl-3-methylimidazolium thiocyanate, 1-decyl-3-methylimidazolium thiocyanate, 1-dodecyl-3-methylimidazolium thiocyanate, 1-tetradecyl-3-methylimidazolium thiocyanate, 1-hexadecyl-3-methylimidazolium thiocyanate, 1-butyl-2,3-dimethylimidazolium thiocyanate, 1-vinyl-3-propylimidazolium thiocyanate, 1-vinyl-3-butylimidazolium thiocyanate, 1-vinyl-3-benzylimidazolium thiocyanate, 1-ethyl-3-methylimidazolium cyanamide, 1-butyl-3-methylimidazolium dicyanamide, 1-hexyl-3-methylimidazolium dicyanamide, 1-ethyl-3-methylimidazolium hydrogen sulfate, 1-butyl-3-methylimidazolium hydrogen sulfate, 1-hexyl-3-methylimidazolium hydrogen sulfate, 1-butyl-2,3-dimethylimidazolium hydrogen sulfate, 1-hexyl-2,3-dimethylimidazolium hydrogen sulfate, 1-methylimidazolium hydrogen sulfate, 1-ethylimidazolium hydrogen sulfate, 1-butylimidazolium hydrogen sulfate, 1-hexylimidazolium hydrogen sulfate, 1-vinyl-3-propylimidazolium hydrogen sulfate, 1-vinyl-3-butylimidazolium hydrogen sulfate or 1-hydroxyethyl-3-methylimidazolium hydrogen sulfate, and the like, which includes imidazole ionic cations containing one or more alkyl side chains with a length of less than or equal to 16 carbons, and anions containing a hydrophilic polar group.

Based on the above, the polymer containing a polar group is hydroxypropyl cellulose and the ionic liquid is 1-ethyl-3-methylimidazolium thiocyanate;

the step of preparing the polymer frame includes: dissolving the hydroxypropyl cellulose in ethanol solvent, stirring overnight to obtain a polymer frame precursor, and then pouring the polymer frame precursor into a mold and removing the ethanol solvent by supercritical carbon dioxide drying to obtain the polymer frame.

A flexible electrolyte is also provided according to the present disclosure, which is prepared according to the above-mentioned preparation method, and is a self-supporting and deformable flexible membrane. The flexible electrolyte will interact with the electrode to make it have good adhesion, so that direct transfer printing can be realized.

An integrated electrode-electrolyte is also provided according to the present disclosure, which comprises the above-mentioned flexible electrolyte and an electrode arranged on the surface of the flexible electrolyte by a thermal transfer printing process.

Use of the above-mentioned flexible electrolyte or the integrated electrode-electrolyte in preparing an ammonia gas electrochemical gas sensor is also provided according to the present disclosure.

An ammonia gas electrochemical gas sensor prepared from the above-mentioned flexible electrolyte, which comprises a bottom case, an upper case arranged at the top of the bottom case, a rigid support separator arranged inside the bottom case, and the flexible electrolyte arranged on the rigid support separator. The upper surface of the flexible electrolyte is provided with a working electrode, and the lower surface of the flexible electrolyte is provided with a counter electrode alone or with a counter electrode and a reference electrode simultaneously, the upper case, the rigid support separator and the bottom case are each provided with a conductive through hole, the working electrode is connected with an electrode welding sheet through wires, and the top of the upper case is provided with a dustproof film.

Specifically, the steps for preparing the ammonia gas electrochemical gas sensor include: adding a dispersant into a noble metal catalyst to prepare slurry; printing the slurry on the surface of a hydrophobic gas permeable membrane and sintering to obtain a hydrophobic gas permeable membrane containing a working electrode, a counter electrode and a reference electrode; transferring the working electrode to the upper surface of a flexible electrolyte and transferring the counter electrode and the reference electrode to the lower surface of the flexible electrolyte respectively by a thermal transfer printing process to obtain an electrode-electrolyte integrated structure; wherein the working electrode of the sensor is combined on the upper surface of the flexible electrolyte, and the working electrode is connected with an electrode welding sheet through a metal wire. The count electrode and the reference electrode are combined on the low surface of the flexible electrolyte, and the counter electrode and the reference electrode are aligned with the through hole of the rigid support separator and the conductive through hole of the bottom case along the same vertical line, and the area of the through holes of the rigid support separator is ensured to be larger than that of the conductive through holes of the bottom case.

Compared with the prior art, the present disclosure has an outstanding substantive feature and a significant progress. Specifically, in the present disclosure, firstly, a polymer frame structure is prepared by using a polymer containing a polar group, and then an ionic liquid capable of interacting with the polymer frame structure is selected, and the anionic and cationic ions in the ionic liquid are utilized to interact dynamically with functional groups on the main chain and side chain of the polymer frame by noncovalent interactions, so that the ionic liquid is absorbed into the polymer frame, and finally a flexible electrolyte with a high-density microscopic surface and a three-dimensional network structure and good internal uniformity of the material is generated. The flexible electrolyte, belonging to a semi-solid electrolyte, is a self-supporting membrane, and can interact with the electrode, make it have good adhesion, and direct transfer printing can be realized, so that the electrode can be transferred to the surface of the flexible electrolyte by thermal transfer printing process, and an integrated electrode-electrolyte structure can be obtained. Finally, the integrated electrode-electrolyte structure is assembled into an ammonia gas electrochemical sensor, thus realizing the miniaturization of the ammonia gas sensor.

Furthermore, by adding a transition metal salt into the ionic liquid, the solubility of ammonia gas in the electrolyte can be effectively increased by using the coordination effect of the transition metal salt, and the ammonia gas in the physical dissolved state in the electrolyte can be stabilized and the current attenuation can be improved, and the coordination effect between the transition metal and ammonia gas is reversible, so that the prepared ammonia gas sensor is a non-consumable ammonia gas electrochemical sensor, thereby reducing the cost.

### BRIEF DESCRIPTION OF THE DRAWINGS

FIG. 1 is an infrared spectrogram of the flexible electrolyte prepared according to the present disclosure, 1-ethyl-3-methylimidazolium thiocyanate raw material and hydroxypropyl cellulose raw material;
FIG. 2 is an optical microscope photograph of hydroxypropyl cellulose raw material in the present disclosure;
FIG. 3 is an optical microscope photograph of the flexible electrolyte prepared in Example 1 of the present disclosure;
FIG. 4 is a curve of the sensor's response current versus time of the ammonia gas sensor prepared in Example 1 of the present disclosure in ammonia gas atmosphere;
FIG. 5 is a curve of the sensor's response current versus time of the ammonia gas sensor prepared in Example 2 of the present disclosure in ammonia gas atmosphere;
FIG. 6 is a curve of the sensor's response current versus time of the ammonia gas sensor prepared in Example 3 of the present disclosure in ammonia gas atmosphere;
FIG. 7 is a curve of the sensor's response current versus time of the ammonia gas sensor prepared in Example 6 of the present disclosure in ammonia gas atmosphere;
FIG. 8 is a curve of the sensor's response current versus time of the ammonia gas sensor prepared in Example 7 of the present disclosure in ammonia gas atmosphere;
FIG. 9 is a curve of the sensor's response current versus time of the ammonia gas sensor prepared in Example 8 of the present disclosure in ammonia gas atmosphere;
FIG. 10 is a curve of the sensor's response current versus time of the ammonia gas sensor prepared in Example 9 of the present disclosure in ammonia gas atmosphere;
FIG. 11 is a curve of the sensor's response current versus time of the ammonia gas sensor prepared in Comparative Example 1 of the present disclosure in ammonia gas atmosphere;
FIG. 12 is a schematic exploded view of the ammonia gas sensor provided in Example 1 of the present disclosure;

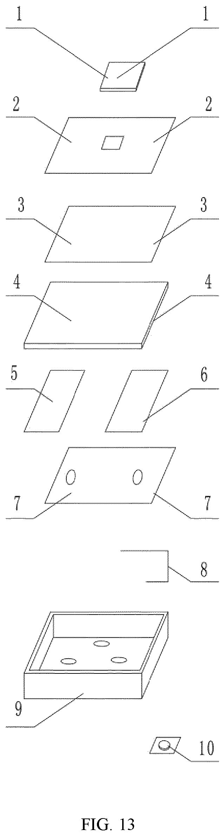

FIG. 13 is a schematic exploded view of the ammonia gas sensor provided in Example 2 of the present disclosure;
FIG. 14 is a schematic exploded view of the ammonia gas sensor provided in Example 4 of the present disclosure;
FIG. 15 is a schematic exploded view of the ammonia gas sensor provided in Example 5 of the present disclosure; and
FIG. 16 is a photograph of the flexible electrolyte prepared in Example 1 of the present disclosure;

In figures: 1, dust-proof film; 2, upper case; 3, working electrode; 4, flexible electrolyte; 5, counter electrode; 6, reference electrode; 7, rigid support separator; 8, metal wire; 9. bottom case; 10, electrode welding sheet.

### DETAILED DESCRIPTION

Hereinafter, the technical solutions of the present disclosure will be described clearly and completely in conjunction with the examples of the present disclosure. Apparently, the described examples are only part of the embodiments of the present disclosure, rather than all the embodiments. All other embodiments obtained by those skilled in the art based on the embodiments of the present disclosure without any creative work fall within the protection scope of the present disclosure.

### Example 1

A method for preparing a flexible electrolyte was provided in this example, which comprised the following specific steps: 10 g of hydroxypropyl cellulose was poured into 120 mL of ethanol solvent and stirred overnight to obtain a polymer framework precursor; then the polymer framework precursor was poured into a mold and part of the solvent was volatilized to obtain a gel-like substance. The gel-like substance was transferred to the molding device and the ethanol was removed by supercritical carbon dioxide drying to obtain a polymer framework.

0.025 g of CuSCN was dissolved in 2.5 g of 1-ethyl-3-methylimidazolium thiocyanate to obtain a mixed solution, and the polymer framework was soaked in the mixed solution until absorption equilibrium was reached, to obtain a flexible electrolyte. In which, the soaking time in this example was 24 h.

A flexible electrolyte was also provided in this example, which was prepared according to the method for preparing a flexible electrolyte described above.

### Infrared spectrum observation:

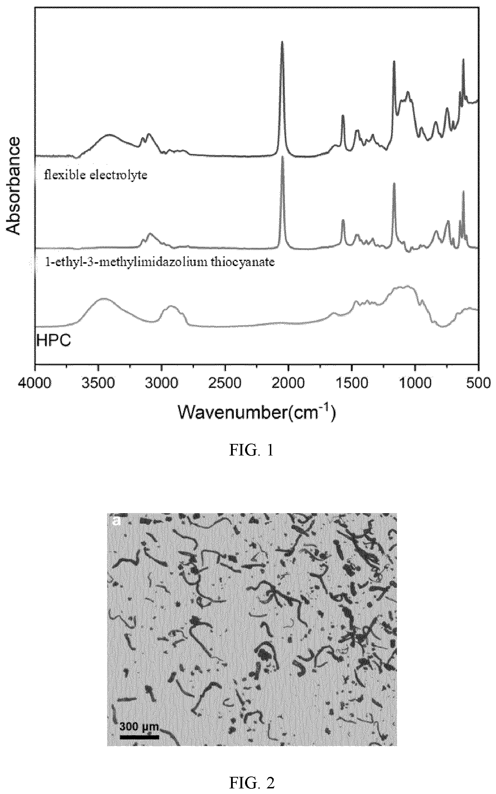

In order to verify the stable binding force inside the flexible electrolyte, hydroxypropyl cellulose (HPC), 1-ethyl-3-methylimidazolium thiocyanate and the prepared flexible electrolyte were characterized by infrared spectroscopy respectively, and the results are shown in FIG. 1. As can be seen from FIG. 1:

In the characteristic curve of HPC, the absorption peak at 2930 cm⁻¹ corresponds to the stretching vibration of methyl and methylene in the side chain; the absorption peak at 2860 cm⁻¹ corresponds to the stretching vibration of methyl and methylene in glucose monomer; the absorption peak at 3454 cm⁻¹ corresponds to the stretching vibration of hydroxyl; the absorption peak at 1466 cm⁻¹ corresponds to the deformation vibration of C-H, and the absorption peak at 1000-1300 cm⁻¹ corresponds to the stretching vibration of the ether bond connected with glucose monomer.

In the characteristic curve of 1-ethyl-3-methylimidazolium thiocyanate, the peak at 3090 cm⁻¹ corresponds to the stretching vibration of C-H in imidazole ring, the peak at 2046 cm⁻¹ corresponds to the stretching vibration of SCN⁻, the absorption peaks at 1568 cm⁻¹ and 1463 cm⁻¹ correspond to the stretching vibration of C=N in imidazole ring, and the absorption peak at 1165 cm⁻¹ corresponds to the in-plane deformation vibration of C-H in imidazole ring.

However, in the characteristic curve of the flexible electrolyte, the characteristic peak position of hydroxyl in HPC shifted from 3454 cm⁻¹ to 3415 cm⁻¹ due to the formation of hydrogen bonds. After HPC interacted dynamically with the ionic liquid, the vibration state of methyl and methylene in the glucose monomer within HPC changes, so the vibration characteristic peak intensity at 2930 cm⁻¹ and 2860 cm⁻¹ is greatly weakened.

In summary, the reason why HPC can form a stable flexible electrolyte with the ionic liquid is that the hydroxyls in the polymer chains form dynamic interactions such as hydrogen bonds and van der Waals forces with the characteristic groups in the cations and anions.

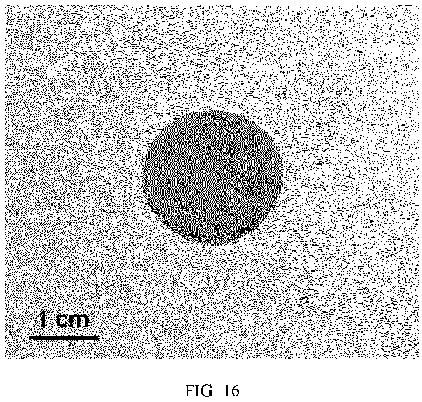

FIG. 16 is a photo of the flexible electrolyte prepared in this example. It can be seen from FIG. 16 that the flexible electrolyte has a gel film structure, which is relatively uniform and has certain flexibility. At the same time, the color of the flexible electrolyte will also be affected by the color of the absorbed ionic liquid. For example, the flexible electrolyte prepared in this example was yellow in appearance because 1-ethyl-3-methylimidazolium thiocyanate was used as the ionic liquid.

An integrated electrode-electrolyte was also provided in this example, which comprised the above-mentioned hydroxypropyl cellulose-based electrolyte and an electrode arranged on the surface of the flexible electrolyte by a thermal transfer printing process.

Use of the above-mentioned flexible electrolyte and the above-mentioned integrated electrode-electrolyte in the preparation of an ammonia gas electrochemical gas sensor was also provided in this example.

### Optical microscope observation:

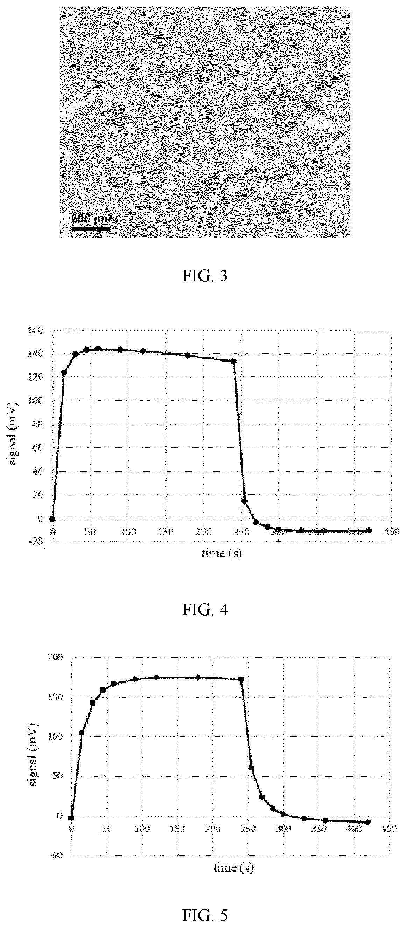

The surface morphology of hydroxypropyl cellulose raw material and the flexible electrolyte were characterized by optical microscope, and the results are shown in FIG. 2 and FIG. 3. It can be seen from FIG. 2 that hydroxypropyl cellulose-based fibers are independent of each other and have not produced good intermolecular interaction. However, after the introduction of 1-ethyl-3-methylimidazolium thiocyanate, its anions and cations can noncovalently interact with the functional groups on the main chain and side chain of hydroxypropyl cellulose, so it can be seen from FIG. 3 that the flexible electrolyte has a continuous and high-density micro-surface morphology. These conditions prove that the flexible electrolyte has a high-density three-dimensional network structure and good internal uniformity of the material, which further proves that hydroxypropyl cellulose can interact with ionic liquids to form hydrogen bonds and van der Waals forces.

An ammonia gas electrochemical gas sensor prepared from the flexible electrolyte was also provided in this example.

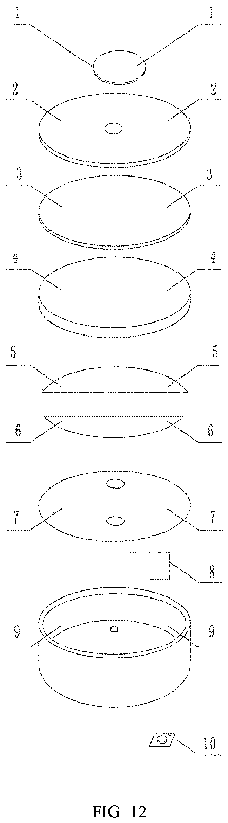

Specifically, as shown in FIG. 12, the ammonia gas electrochemical gas sensor provided in this example comprises a bottom case 9, an upper case 2 arranged at the top of the bottom case 9, a rigid support separator 7 arranged inside the bottom case 9, and the flexible electrolyte 4 arranged on the rigid support separator 7. The upper surface of the flexible electrolyte 4 is provided with a working electrode 3, and the lower surface of the flexible electrolyte 4 is provided with a counter electrode 5 and a reference electrode 6. The upper case 2, the rigid support separator 7 and the bottom case 9 are each provided with a conductive through hole. The working electrode 3 is connected with an electrode welding sheet 10 through a metal wire 8. The top of the upper case 2 is provided with a dustproof film 1. In which, the bottom case and the upper case are both cylindrical, the working electrode is circular, and the counter electrode and the reference electrode are both semicircular.

Specifically, the steps for preparing the ammonia gas electrochemical gas sensor comprise: adding a dispersant into a noble metal catalyst to prepare a slurry; printing the slurry on the surface of a hydrophobic gas permeable membrane and sintering to obtain a hydrophobic gas permeable membrane containing a working electrode, a counter electrode and a reference electrode; transferring the working electrode to the upper surface of a flexible electrolyte and transferring the counter electrode and the reference electrode to the lower surface of the flexible electrolyte respectively by a thermal transfer printing process to obtain an integrated electrode-electrolyte structure. The working electrode of the sensor is combined with the upper surface of the flexible electrolyte, and the working electrode is connected with an electrode welding sheet through a metal wire. The count electrode and the reference electrode are combined on the low surface of the flexible electrolyte, and the counter electrode and the reference electrode are aligned with the through hole of the rigid support separator and the conductive through hole of the bottom case along the same vertical line, and the area of the through hole of the rigid support separator is ensured to be larger than that of the conductive through holes of the bottom case.

Specifically, in this example, hydroxypropyl cellulose was used to prepare a hydroxypropyl cellulose polymer frame structure, and then the hydroxypropyl cellulose polymer frame structure was used to interact with ionic liquid, and anions and cations in 1-ethyl-3-methylimidazolium thiocyanate can be used to noncovalently interact with functional groups on the main chain and side chain of hydroxypropyl cellulose to generate a flexible electrolyte with a specific high-density microscopic surface, a high-density three-dimensional network structure and good internal uniformity of the material.

The flexible electrolyte is a membrane with self-supporting property. Then an electrode was transferred to the surface of the flexible electrolyte by thermal transfer printing process, and the integrated electrode-electrolyte structure was obtained. Finally, an electrochemical sensor was assembled for target gas response, thus realizing the miniaturization of ammonia gas sensor.

Furthermore, by adding the transition metal salt CuSCN into the 1-ethyl-3-methylimidazolium thiocyanate, the solubility of ammonia gas in the electrolyte can be effectively increased by using the coordination effect of the transition metal salt, and the ammonia gas in the physical dissolved state in the electrolyte can be stabilized and the current attenuation can be improved. And the coordination effect between transition metal and ammonia gas is reversible, so that the prepared sensor is a non-consumable ammonia gas electrochemical sensor.

### Example 2

A method for preparing a flexible electrolyte was provided in this example, which comprised the following specific steps: 10 g of hydroxypropyl cellulose was poured into 120 mL of ethanol solvent and stirred overnight to obtain a polymer framework precursor; then the polymer framework precursor was poured into a mold and part of the solvent was volatilized to obtain a gel-like substance. The gel-like substance was transferred to a forming device and the ethanol was removed by supercritical carbon dioxide drying to obtain the polymer framework.

0.05 g of CuSCN was dissolved in 2.5 g of 1-ethyl-3-methylimidazolium thiocyanate to obtain a mixed solution, and the polymer framework was soaked in the mixed solution until absorption equilibrium was reached, to obtain a flexible electrolyte. In which the soaking time in this example was 24 h.

A flexible electrolyte prepared according to the above-mentioned method for preparing a flexible electrolyte was also provided in this example.

Use of the above-mentioned flexible electrolyte in the preparation of an ammonia gas electrochemical gas sensor was also provided in this example.

An ammonia gas electrochemical gas sensor prepared from the flexible electrolyte was also provided in this example.

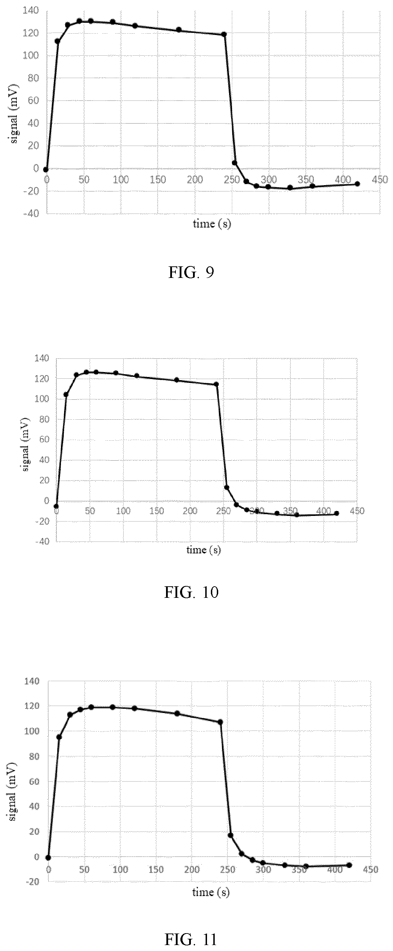

Specifically, as shown in FIG. 9, the ammonia gas electrochemical gas sensor provided in this example comprised a bottom case 9, an upper case 2 arranged at the top of the bottom case 9, a rigid support separator 7 arranged inside the bottom case 9, and a flexible electrolyte 4 arranged on the rigid support separator 7. The upper surface of the flexible electrolyte 4 is provided with a working electrode 3, and the lower surface of the flexible electrolyte 4 is provided with a counter electrode 5 and a reference electrode 6. The upper case 2, the rigid support partition 7 and the bottom case 9 are each provided with a conductive through hole. The working electrode 3 is connected with an electrode welding sheet 10 through a metal wire 8. The top of the upper case 2 is provided with a dustproof film 1. In which, the bottom case and the upper case were both rectangular, the working electrode was rectangular, and the counter electrode and the reference electrode were both rectangular.

Specifically, the steps for preparing the ammonia electrochemical gas sensor included: adding a dispersant into a noble metal catalyst to prepare slurry; printing the slurry on the surface of a hydrophobic gas permeable membrane and sintering to obtain a hydrophobic gas permeable membrane containing a working electrode, a counter electrode and a reference electrode; transferring the working electrode to the upper surface of a flexible electrolyte and transferring the counter electrode and the reference electrode to the lower surface of the flexible electrolyte respectively by a thermal transfer printing process to obtain an integrated electrode-electrolyte structure. The working electrode of the sensor was combined with the upper surface of the flexible electrolyte, and the working electrode was connected with an electrode welding sheet through a metal wire. The count electrode and the reference electrode were combined on the low surface of the flexible electrolyte, and the counter electrode and the reference electrode were aligned with the through hole of the rigid support separator and the conductive through hole of the bottom case along the same vertical line, and the area of the through hole of the rigid support separator was ensured to be larger than that of the conductive through hole of the bottom case.

### Example 3

A method for preparing a flexible electrolyte was provided in this example, which comprised the following specific steps: 10 g of hydroxypropyl cellulose was poured into 120 mL of ethanol solvent and stirred overnight to obtain a polymer framework precursor; then the polymer framework precursor was poured into a mold and part of the solvent was volatilized to obtain a gel-like substance. The gel-like substance was transferred to a shaping device and the ethanol was removed by supercritical carbon dioxide drying to obtain the polymer framework.

0.1 g of CuSCN was dissolved in 2.5 g of 1-ethyl-3-methylimidazolium thiocyanate to obtain a mixed solution, and the polymer framework was soaked in the mixed solution until absorption equilibrium was reached, to obtain a flexible electrolyte, wherein the soaking time in this example was 24 h.

A flexible electrolyte prepared according to the above-mentioned method for preparing a flexible electrolyte was also provided in this example.

Use of the above-mentioned flexible electrolyte in the preparation of an ammonia electrochemical gas sensor was also provided in this example.

An ammonia electrochemical gas sensor prepared from the flexible electrolyte was also provided in this example.

Specifically, the structure of the ammonia gas electrochemical gas sensor provided in this example was the same as that in Example 1.

Specifically, the steps for preparing the ammonia electrochemical gas sensor comprised: adding a dispersant into a noble metal catalyst to prepare a slurry; printing the slurry on the surface of a hydrophobic gas permeable membrane and sintering to obtain a hydrophobic gas permeable membrane containing a working electrode, a counter electrode and a reference electrode; transferring the working electrode to the upper surface of a flexible electrolyte and transferring the counter electrode and the reference electrode to the lower surface of the flexible electrolyte respectively by a thermal transfer printing process to obtain an integrated electrode-electrolyte structure. The working electrode of the sensor was combined with the upper surface of the flexible electrolyte, and the working electrode was connected with an electrode welding sheet through a metal wire. The count electrode and the reference electrode were combined on the low surface of the flexible electrolyte, and the counter electrode and the reference electrode were aligned with the through hole of the rigid support separator and the conductive through hole of the bottom case along the same vertical line, and the area of the through hole of the rigid support separator was ensured to be larger than that of the conductive through hole of the bottom case.

### Example 4

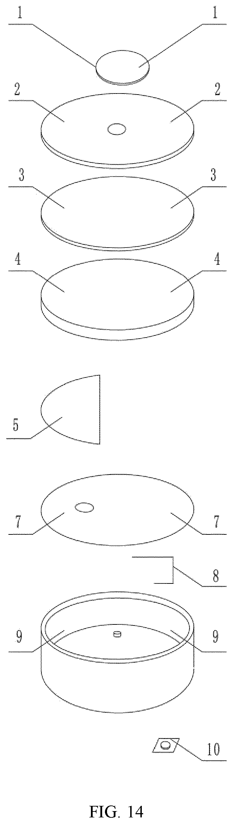

The difference between this example and Example 1 is that the ammonia gas electrochemical gas sensor prepared in this example was a cylindrical two-electrode NH3 sensor as shown in FIG. 14.

It specifically comprised a bottom case 9, an upper case 2 arranged at the top of the bottom case 9, a rigid support separator 7 arranged inside the bottom case 9, and a flexible electrolyte 4 arranged on the rigid support separator 7. The upper surface of the flexible electrolyte 4 was provided with a working electrode 3, and the lower surface of the flexible electrolyte 4 was provided with a counter electrode 5. The upper case 2, the rigid support partition 7 and the bottom case 9 were each provided with a conductive through hole. The working electrode 3 was connected with an electrode welding sheet 10 through a metal wire 8. The top of the upper case 2 was provided with a dustproof film 1. In which, the bottom case and the upper case were both cylindrical, the working electrode was circular, and the counter electrode was semicircular.

### Example 5

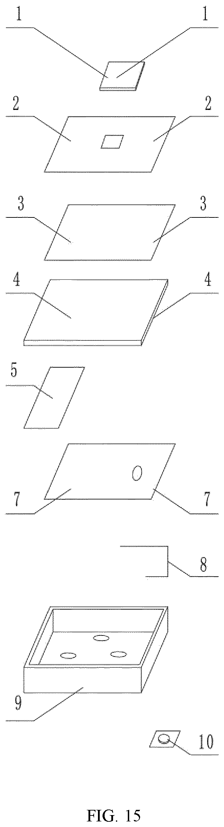

The difference between this example and Example 2 is that the ammonia gas electrochemical gas sensor prepared in this example was a cuboid two-electrode NH3 sensor as shown in FIG. 15.

Specifically, the ammonia gas electrochemical gas sensor provided in this example comprised a bottom case 9, an upper case 2 arranged at the top of the bottom case 9, a rigid support separator 7 arranged inside the bottom case 9, and a flexible electrolyte 4 arranged on the rigid support separator 7. The upper surface of the flexible electrolyte 4 was provided with a working electrode 3, and the lower surface of the flexible electrolyte 4 was provided with a counter electrode 5. The upper case 2, the rigid support partition 7 and the bottom case 9 were each provided with conductive through holes. The working electrode 3 was connected with an electrode welding sheet 10 through a metal wire 8. The top of the upper case 2 was provided with a dustproof film 1. In which, the bottom shell and the upper shell were both rectangular, the working electrode was rectangular, and the counter electrode was rectangular.

### Example 6

A method for preparing a flexible electrolyte was provided in this example 6, which comprised the following specific steps: 10 g of hydroxypropyl cellulose was poured into 120 mL of ethanol solvent and stirred overnight to obtain a polymer framework precursor; then the polymer framework precursor was poured into a mold and part of the solvent was volatilized to obtain a gel-like substance. The gel-like substance was transferred to a shaping device and the ethanol was removed by supercritical carbon dioxide drying to obtain a polymer framework;

0.1 g of CuSCN was dissolved in 1 g of 1-ethyl-3-methylimidazolium thiocyanate to obtain a mixed solution, and the obtained polymer framework was soaked in the mixed solution until absorption equilibrium was reached, to obtain a flexible electrolyte, wherein the soaking time in this example 6 was 24 h.

A flexible electrolyte prepared according to the above-mentioned method for preparing a flexible electrolyte was also provided in this example.

Use of the above-mentioned flexible electrolyte in the preparation of an ammonia electrochemical gas sensor was also provided in this example.

An ammonia electrochemical gas sensor prepared from the flexible electrolyte was also provided in this example.

Specifically, the structure of the ammonia gas electrochemical gas sensor provided in this example 6 was the same as that in Example 1. It specifically comprised a bottom case 9, an upper case 2 arranged at the top of the bottom case 9, a rigid support separator 7 arranged inside the bottom case 9, and a flexible electrolyte 4 arranged on the rigid support separator 7. The upper surface of the flexible electrolyte 4 was provided with a working electrode 3. The lower surface of the flexible electrolyte 4 was provided with a counter electrode 5 alone or with a counter electrode 5 and a reference electrode 6 simultaneously. The upper case 2, the rigid support partition 7 and the bottom case 9 were each provided with a conductive through hole, and the working electrode 3 was connected with an electrode welding sheet 10 through a wire. The top of the upper case 2 was provided with a dustproof film 1. In which, the bottom case 9 and the upper case 2 were both cylindrical, the working electrode was circular, and the counter electrode and the reference electrode were both semicircular.

Specifically, the steps for preparing the ammonia electrochemical gas sensor comprised: adding a dispersant into a noble metal catalyst to prepare a slurry; printing the slurry on the surface of a hydrophobic gas permeable membrane and sintering to obtain a hydrophobic gas permeable membrane containing a working electrode, a counter electrode and a reference electrode; transferring the working electrode to the upper surface of a flexible electrolyte and transferring the counter electrode and the reference electrode to the lower surface of the flexible electrolyte respectively by a thermal transfer printing process to obtain an integrated electrode-electrolyte structure. The working electrode of the sensor was combined with the upper surface of the flexible electrolyte, and the working electrode was connected with an electrode welding sheet through a metal wire. The count electrode and the reference electrode were combined on the low surface of the flexible electrolyte, and the counter electrode and the reference electrode were aligned with the through hole of the rigid support separator and the conductive through hole of the bottom case along the same vertical line, and the area of the through hole of the rigid support separator was ensured to be larger than that of the conductive through hole of the bottom case.

### Example 7

A method for preparing a flexible electrolyte was provided in this example 7, which comprised the following specific steps: 10 g of hydroxypropyl cellulose was poured into 120 mL of ethanol solvent and stirred overnight to obtain a polymer framework precursor; then the polymer framework precursor was poured into a mold and part of the solvent was volatilized to obtain a gel-like substance. The gel-like substance was transferred to a shaping device and the ethanol was removed by supercritical carbon dioxide drying to obtain a polymer framework.

0.1 g of CuSCN was dissolved in 4 g of 1-ethyl-3-methylimidazolium thiocyanate to obtain a mixed solution, and the obtained polymer framework was soaked in the mixed solution until absorption equilibrium was reached, to obtain a flexible electrolyte, wherein the soaking time in this example 7 was 24 h.

A flexible electrolyte prepared according to the above-mentioned method for preparing a flexible electrolyte was also provided in this example.

Use of the above-mentioned flexible electrolyte in the preparation of an ammonia electrochemical gas sensor was also provided in this example.

An ammonia gas electrochemical gas sensor prepared from the flexible electrolyte was also provided in this example.

Specifically, the structure of the ammonia electrochemical gas sensor provided in this example 7 was the same as that in Example 1. It specifically comprised a bottom case 9, an upper case 2 arranged at the top of the bottom case 9, a rigid support separator 7 arranged inside the bottom case 9, and a flexible electrolyte 4 arranged on the rigid support separator 7. The upper surface of the flexible electrolyte 4 was provided with a working electrode 3. The lower surface of the flexible electrolyte 4 was provided with a counter electrode 5 alone or with a counter electrode 5 and a reference electrode 6 simultaneously. The upper case 2, the rigid support partition 7 and the bottom case 9 were each provided with a conductive through hole, and the working electrode 3 was connected with an electrode welding sheet 10 through a wire. The top of the upper case 2 was provided with a dustproof film 1. In which, the bottom case 9 and the upper case 2 were both cylindrical, the working electrode was circular, and the counter electrode and the reference electrode were both semicircular.

Specifically, the steps for preparing the ammonia electrochemical gas sensor comprised: adding a dispersant into a noble metal catalyst to prepare a slurry; printing the slurry on the surface of a hydrophobic gas permeable membrane and sintering to obtain a hydrophobic gas permeable membrane containing a working electrode, a counter electrode and a reference electrode; transferring the working electrode to the upper surface of a flexible electrolyte and transferring the counter electrode and the reference electrode to the lower surface of the flexible electrolyte respectively by a thermal transfer printing process to obtain an integrated electrode-electrolyte structure. The working electrode of the sensor was combined with the upper surface of the flexible electrolyte, and the working electrode was connected with an electrode welding sheet through a metal wire. The count electrode and the reference electrode were combined on the low surface of the flexible electrolyte, and the counter electrode and the reference electrode were aligned with the through hole of the rigid support separator and the conductive through hole of the bottom case along the same vertical line, and the area of the through hole of the rigid support separator was ensured to be larger than that of the conductive through hole of the bottom case.

### Example 8

A method for preparing a flexible electrolyte was provided in this example 8, which comprised the following specific steps: 10 g of hydroxypropyl cellulose was poured into 120 mL of ethanol solvent and stirred overnight to obtain a polymer framework precursor; then the polymer framework precursor was poured into a mold and part of the solvent was volatilized to obtain a gel-like substance. The gel-like substance was transferred to a shaping device and the ethanol was removed by supercritical carbon dioxide drying to obtain the polymer framework.

0.1 g of Ni(SCN)₂ was dissolved in 2.5 g of 1-ethyl-3-methylimidazolium thiocyanate to obtain a mixed solution, and the polymer framework was soaked in the mixed solution until absorption equilibrium was reached, to obtain a flexible electrolyte, wherein the soaking time in this example 8 was 24 h.

A flexible electrolyte prepared according to the above-mentioned method for preparing a flexible electrolyte was also provided in this example.

Use of the above-mentioned flexible electrolyte in the preparation of an ammonia gas electrochemical gas sensor was also provided in this example.

An ammonia gas electrochemical gas sensor prepared from the flexible electrolyte was also provided in this example.

Specifically, the structure of the ammonia electrochemical gas sensor provided in this example was the same as that in Example 1.

Specifically, the steps for preparing the ammonia gas electrochemical gas sensor comprised: adding a dispersant into a noble metal catalyst to prepare a slurry; printing the slurry on the surface of a hydrophobic gas permeable membrane and sintering to obtain a hydrophobic gas permeable membrane containing a working electrode, a counter electrode and a reference electrode; transferring the working electrode to the upper surface of a flexible electrolyte and transferring the counter electrode and the reference electrode to the lower surface of the flexible electrolyte respectively by a thermal transfer printing process to obtain an integrated electrode-electrolyte structure. The working electrode of the sensor was combined with the upper surface of the flexible electrolyte, and the working electrode was connected with an electrode welding sheet through a metal wire. The count electrode and the reference electrode are combined on the low surface of the flexible electrolyte, and the counter electrode and the reference electrode were aligned with the through holes of the rigid support separator and the conductive through hole of the bottom case along the same vertical line, and the area of the through hole of the rigid support separator was ensured to be larger than that of the conductive through hole of the bottom case.

### Example 9

A method for preparing a flexible electrolyte was provided in this example 9, which comprised the following specific steps: 10 g of hydroxypropyl cellulose was poured into 120 mL of ethanol solvent and stirred overnight to obtain a polymer framework precursor; then the polymer framework precursor was poured into a mold and part of the solvent was volatilized to obtain a gel-like substance. The gel-like substance was transferred to a shaping device and the ethanol was removed by supercritical carbon dioxide drying to obtain a polymer framework.

0.1 g of Co(SCN)₂ was dissolved in 2.5 g of 1-ethyl-3-methylimidazolium thiocyanate to obtain a mixed solution, and the polymer framework was soaked in the mixed solution until absorption equilibrium was reached, to obtain a flexible electrolyte, wherein the soaking time in this example was 24 h.

A flexible electrolyte prepared according to the above-mentioned method for preparing a flexible electrolyte was also provided in this example.

Use of the above-mentioned flexible electrolyte in the preparation of an ammonia gas electrochemical gas sensor was also provided in this example.

An ammonia gas electrochemical gas sensor prepared from the flexible electrolyte was also provided in this example.

Specifically, the structure of the ammonia electrochemical gas sensor provided in this example was the same as that in Example 1.

Specifically, the steps for preparing the ammonia gas electrochemical gas sensor comprise: adding a dispersant into a noble metal catalyst to prepare a slurry; printing the slurry on the surface of a hydrophobic gas permeable membrane and sintering to obtain a hydrophobic gas permeable membrane containing a working electrode, a counter electrode and a reference electrode; transferring the working electrode to the upper surface of a flexible electrolyte and transferring the counter electrode and the reference electrode to the lower surface of the flexible electrolyte respectively by a thermal transfer printing process to obtain an integrated electrode-electrolyte structure. The working electrode of the sensor was combined with the upper surface of the flexible electrolyte, and the working electrode was connected with an electrode welding sheet through a metal wire. The count electrode and the reference electrode were combined on the low surface of the flexible electrolyte, and the counter electrode and the reference electrode were aligned with the through hole of the rigid support separator and the conductive through hole of the bottom case along the same vertical line, and the area of the through hole of the rigid support separator was ensured to be larger than that of the conductive through hole of the bottom case.

### Comparative example 1

A method for preparing a flexible electrolyte was provided in this comparative example 1, which comprised the following specific steps: 10 g of hydroxypropyl cellulose was poured into 120 mL of ethanol solvent and stirred overnight to obtain a polymer framework precursor; then the polymer framework precursor was poured into a mold and part of the solvent was volatilized to obtain a gel-like substance. The gel-like substance was transferred to a shaping device and the ethanol was removed by supercritical carbon dioxide drying to obtain a polymer framework.

The polymer frame was soaked in 2.5 g of 1-ethyl-3-methylimidazolium thiocyanate until absorption equilibrium was reached, to obtain a flexible electrolyte, wherein the soaking time in this comparative example was 24 h.

A flexible electrolyte prepared according to the above-mentioned method for preparing a flexible electrolyte was also provided in this comparative example.

Use of the above-mentioned flexible electrolyte in the preparation of an ammonia electrochemical gas sensor was also provided in this comparative example.

An ammonia gas electrochemical gas sensor prepared from the flexible electrolyte was also provided in this comparative example.

Specifically, the structure of the ammonia gas electrochemical gas sensor provided in this comparative example 1 was the same as that in Example 1. It specifically comprised a bottom case 9, an upper case 2 arranged at the top of the bottom case 9, a rigid support separator 7 arranged inside the bottom case 9, and a flexible electrolyte 4 arranged on the rigid support separator 7. The upper surface of the flexible electrolyte 4 was provided with a working electrode 3. The lower surface of the flexible electrolyte 4 was provided with a counter electrode 5 alone or with a counter electrode 5 and a reference electrode 6 simultaneously. The upper case 2, the rigid support partition 7 and the bottom case 9 were each provided with a conductive through hole, and the working electrode 3 was connected with an electrode welding sheet 10 through a wire. The top of the upper case 2 was provided with a dustproof film 1. In which, the bottom case 9 and the upper case 2 were both cylindrical, the working electrode was circular, and the counter electrode and the reference electrode were both semicircular.

Specifically, the steps for preparing the ammonia electrochemical gas sensor comprised: adding a dispersant into a noble metal catalyst to prepare a slurry; printing the slurry on the surface of a hydrophobic gas permeable membrane and sintering to obtain a hydrophobic gas permeable membrane containing a working electrode, a counter electrode and a reference electrode; transferring the working electrode to the upper surface of a flexible electrolyte and transferring the counter electrode and the reference electrode to the lower surface of the flexible electrolyte respectively by a thermal transfer printing process to obtain an integrated electrode-electrolyte structure. The working electrode of the sensor was combined with the upper surface of the flexible electrolyte, and the working electrode was connected with an electrode welding sheet through a metal wire. The count electrode and the reference electrode were combined on the low surface of the flexible electrolyte, and the counter electrode and the reference electrode were aligned with the through hole of the rigid support separator and the conductive through hole of the bottom case along the same vertical line, and the area of the through hole of the rigid support separator was ensured to be larger than that of the conductive through hole of the bottom case.

### Performance test:

### Sensor signal response test:

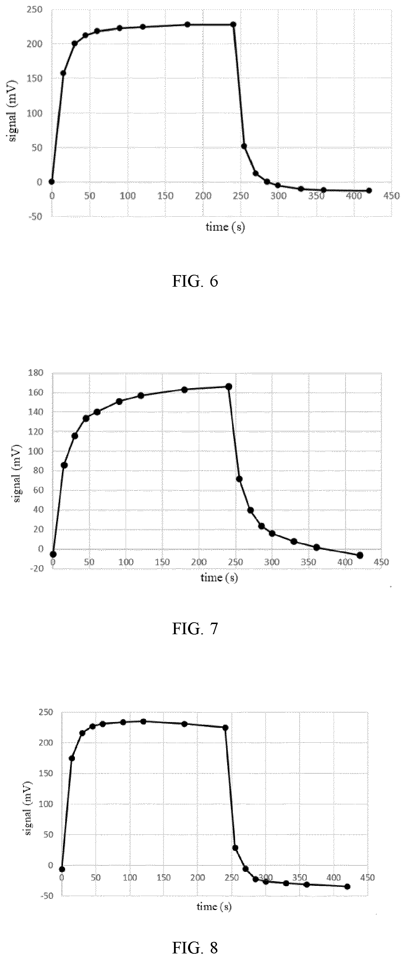

The sensor signal responses of ammonia gas sensors made in Examples 1 to 3, Examples 6 to 7, Examples 8 to 9 and Comparative Example 1 were tested, and the specific test steps were as follows: the ammonia gas sensors were aged for 3 days and the response performance test was performed in a dynamic atmosphere of 50 ppm ammonia gas (150 mL/min) to examine the sensor signal response. As can be seen from FIG. 7, the ammonia gas sensor made without CuSCN addition has a response current in ammonia gas atmosphere, but current decay occurred after being immersed for a long time.

The test results are shown in FIG. 4, FIG. 5, FIG. 6, FIG. 7, FIG. 8, FIG. 9, FIG. 10, FIG. 11 and Table 1.

**Table 1**

| Groups | Sensitivity (nA/ppm) | current attenuation (%) |
|---|---|---|
| Example 1 | 115.2 | 7.6 |
| Example 2 | 139.2 | 1.1 |
| Example 3 | 181.6 | 0 |
| Example 6 | 132.8 | 0 |
| Example 7 | 188.0 | 4.2 |
| Example 8 | 104 | 9.2 |
| Example 9 | 100.8 | 9.5 |
| Comparative example1 | 95.2 | 10.1 |

From the comparison of FIG. 4, FIG. 5 and FIG. 6, it can be seen that the more CuCN content in the electrolyte, the greater the response signal at the same gas concentration, that is, the higher the sensitivity, and the addition of CuCN also improves the current attenuation problem in ionic liquid electrolyte. The analysis showed that these advantages mainly depend on that CuSCN can effectively coordinate with NH₃, which not only increases the physical solubility of NH₃ in the electrolyte and increases the sensitivity of the sensor; but also can occupy lone pair of electrons in NH₃ and avoid combining with migrating ions, thus improving the current attenuation of the sensor in NH₃.

From the comparison of the results of Example 3 and Comparative Example 1, it can be seen that when the content of CuSCN in the electrolyte was increased from 0 g to 0.1 g, the sensitivity of the sensor was also increased from about 95.2 nA/ppm to about 181 nA/ppm, with a significant increase of 85.8 nA/ppm. Therefore, the addition of CuSCN can enhance the interaction between electrolyte and gas, thus improving the sensitivity of the sensor. In addition to improving the sensitivity, the current attenuation of the sensor also decreased from 10.1% to 0% when the content of CuSCN increased from 0 g to 0.1 g, which proved that CuSCN in the electrolyte could effectively prevent the interaction between ammonia gas and migrating ions.

From the comparison of FIG. 6 with FIG. 7 and FIG. 8, it can be seen that when the mass ratio of polymer to ionic liquid is 10:1, the sensor has a small sensitivity of 132.8 nA/ppm, and a current attenuation of 0%. When the ionic liquid content was increased to 4:1, the sensitivity of the sensor was increased significantly to 181.6nA/ppm, and the current attenuation was also 0%. When the ionic liquid content was further increased to 5:2, the sensitivity of the sensor was only increased slightly to 188.0 nA/ppm, at the same time, the current attenuation reached 4.2%. Therefore, the appropriate ionic liquid content can make the sensor have high sensitivity and avoid current attenuation.

From the comparison of FIG. 6 with FIG. 9 and FIG. 10, it can be seen that the types of transition metal salts in the electrolyte have great influence on the performance of the sensor. When the transition metal salt was CuSCN, the sensitivity of the sensor was increased the highest, reaching 181.6 nA/ppm, and at the same time, no current attenuation occurred; when the transition metal salt was changed to Ni(SCN)₂, the sensitivity of the sensor was only 104 nA/ppm, and the current attenuation was 9.2%; when the transition metal salt was replaced by Co(SCN)₂, the sensitivity of the sensor was even smaller, which was 100.8 nA/ppm, and the current attenuation was 9.5%. From the analysis of coordination constants of different transition metal ions, it is considered that the coordination constant of Ni²⁺ and NH₃ is 8.74, Co²⁺ and NH₃ is 5.11 and Cu⁺ and NH₃ is 10.86. It can be seen from the data that the addition of metal ions that can coordinate with NH₃ can increase the sensitivity of the sensor. However, the coordination constant of Ni²⁺ and Co²⁺ is less than 9.25 of that of H⁺ and NH₃, so NH₃ is still mainly coordinated with H⁺, which leads to a decrease in the migration speed of migrating ions, a decrease in the concentration of H⁺ in the counter electrode and a slowdown in the reduction rate, thus failing to improve the current attenuation. However, the coordination constant of Cu⁺ and NH₃ is slightly larger than the stability constant of NH⁴⁺, which can avoid the formation of NH⁴⁺, and the coordination constant is relatively appropriate, so it can slowly recover from Cu(NH₃)₂SCN to CuSCN in the electrolyte, so the coordination with NH₃ is reversible, which can improve the current attenuation in ammonia gas atmosphere.

To sum up, the integrated electrode-electrolyte structure and ammonia gas sensor provided in the present disclosure can effectively improve the miniaturization process of the sensor and improve the current attenuation problem of the integrated electrode-electrolyte structure.

Finally, it should be explained that the above examples are only used to illustrate the technical solutions of the present disclosure, and are not intended to limit the present disclosure. Although the present disclosure has been described in detail with reference to preferred examples, it should be understood by those skilled in the art that modification may be made to the specific embodiments of the present disclosure or equivalent substitution may be made onto a part of technical features without departing from the spirit of the technical solutions of the present disclosure, which should be fall within the protection scope the technical solutions of the present disclosure.

## Claims

1. A flexible electrolyte, prepared from an ionic liquid, a polymer containing a polar group and a transition metal salt;
the polymer containing a polar group includes a carboxyl-containing polymer, a hydroxyl-containing polymer or a cyano-containing polymer.

2. The flexible electrolyte according to claim 1, wherein the transition metal salt includes an inorganic salt which contains Mn²⁺, Cu²⁺, Ni²⁺, Zn²⁺, Ag⁺, or Co²⁺ and is capable of performing a reversible coordination interaction with NH₃;
the ionic liquid is 1-ethyl-3-methylimidazolium thiocyanate, 1-propyl-3-methylimidazolium thiocyanate, 1-butyl-3-methylimidazolium thiocyanate, 1-hexyl-3-methylimidazolium thiocyanate, 1-octyl-3-methylimidazolium thiocyanate, 1-decyl-3-methylimidazolium thiocyanate, 1-dodecyl-3-methylimidazolium thiocyanate, 1-tetradecyl-3-methylimidazolium thiocyanate, 1-hexadecyl-3-methylimidazolium thiocyanate, 1-butyl-2,3-dimethylimidazolium thiocyanate, 1-vinyl-3-propylimidazolium thiocyanate, 1-vinyl-3-butylimidazolium thiocyanate, 1-vinyl-3-benzylimidazolium thiocyanate, 1-ethyl-3-methylimidazolium cyanamide, 1-butyl-3-methylimidazolium dicyanamide, 1-hexyl-3-methylimidazolium dicyanamide, 1-ethyl-3-methylimidazolium hydrogen sulfate, 1-butyl-3-methylimidazolium hydrogen sulfate, 1-hexyl-3-methylimidazolium hydrogen sulfate, 1-butyl-2,3-dimethylimidazolium hydrogen sulfate, 1-hexyl-2,3-dimethylimidazolium hydrogen sulfate, 1-methylimidazolium hydrogen sulfate, 1-ethylimidazolium hydrogen sulfate, 1-butylimidazolium hydrogen sulfate, 1-hexylimidazolium hydrogen sulfate, 1-vinyl-3-propylimidazolium hydrogen sulfate, 1-vinyl-3-butylimidazolium hydrogen sulfate or 1-hydroxyethyl-3-methylimidazolium hydrogen sulfate; and
the polymer containing a polar group includes hydroxyethyl cellulose, hydroxypropyl cellulose, cellulose acetate, PAA or PMAA.

3. The flexible electrolyte according to claim 1, wherein the polymer containing a polar group is hydroxypropyl cellulose;
the ionic liquid is 1-ethyl-3-methylimidazolium thiocyanate;
the transition metal salt is CuSCN.

4. The flexible electrolyte according to claim 1, wherein a mass ratio of the polymer containing a polar group, the ionic liquid and the transition metal salt is 100:(20-80):(0.02-16).

5. A method for preparing a flexible electrolyte, comprising:
dissolving, forming and drying a polymer containing a polar group to obtain a polymer frame, and soaking the polymer frame using an ionic liquid having a dissolved transition metal salt until an absorption equilibrium is reached, to obtain a flexible electrolyte;
the polymer containing a polar group includes a carboxyl-containing polymer, a hydroxyl-containing polymer and a cyano-containing polymer.

6. The method for preparing a flexible electrolyte according to claim 5, wherein a mass ratio of the polymer containing the polar group, the ionic liquid and the transition metal salt is 100:(20-80):(0.02-16).

7. The method for preparing a flexible electrolyte according to claim 5, wherein the polymer containing a polar group includes hydroxyethyl cellulose, hydroxypropyl cellulose, cellulose acetate, PAA or PMAA.

8. The method for preparing a flexible electrolyte according to claim 7, wherein the transition metal salt includes an inorganic salt which contains Mn²⁺, Cu²⁺, Ni²⁺, Zn²⁺, Ag⁺, or Co²⁺ and is capable of performing a reversible coordination interaction with NH₃.

9. The method for preparing a flexible electrolyte according to claim 8, wherein the ionic liquid is 1-ethyl-3-methylimidazolium thiocyanate, 1-propyl-3-methylimidazolium thiocyanate, 1-butyl-3-methylimidazolium thiocyanate, 1-hexyl-3-methylimidazolium thiocyanate, 1-octyl-3-methylimidazolium thiocyanate, 1-decyl-3-methylimidazolium thiocyanate, 1-dodecyl-3-methylimidazolium thiocyanate, 1-tetradecyl-3-methylimidazolium thiocyanate, 1-hexadecyl-3-methylimidazolium thiocyanate, 1-butyl-2,3-dimethylimidazolium thiocyanate, 1-vinyl-3-propylimidazolium thiocyanate, 1-vinyl-3-butylimidazolium thiocyanate, 1-vinyl-3-benzylimidazolium thiocyanate, 1-ethyl-3-methylimidazolium cyanamide, 1-butyl-3-methylimidazolium dicyanamide, 1-hexyl-3-methylimidazolium dicyanamide, 1-ethyl-3-methylimidazolium hydrogen sulfate, 1-butyl-3-methylimidazolium hydrogen sulfate, 1-hexyl-3-methylimidazolium hydrogen sulfate, 1-butyl-2,3-dimethylimidazolium hydrogen sulfate, 1-hexyl-2,3-dimethylimidazolium hydrogen sulfate, 1-methylimidazolium hydrogen sulfate, 1-ethylimidazolium hydrogen sulfate, 1-butylimidazolium hydrogen sulfate, 1-hexylimidazolium hydrogen sulfate, 1-vinyl-3-propylimidazolium hydrogen sulfate, 1-vinyl-3-butylimidazolium hydrogen sulfate or 1-hydroxyethyl-3-methylimidazolium hydrogen sulfate.

10. The method for preparing a flexible electrolyte according to any one of claims 5 to 9, wherein the polymer containing a polar group is hydroxypropyl cellulose and the ionic liquid is 1-ethyl-3-methylimidazolium thiocyanate; and
the steps of preparing the polymer frame include: dissolving the hydroxypropyl cellulose in ethanol solvent, stirring overnight to obtain a polymer frame precursor, then pouring the polymer frame precursor into a mold and removing the ethanol solvent by supercritical carbon dioxide drying to obtain the polymer frame.

11. A flexible electrolyte, prepared by the method according to any one of claims 5 to 10, which is a self-supporting and deformable flexible membrane.

12. An integrated electrode-electrolyte, comprising the flexible electrolyte according to claim 11, and an electrode arranged on a surface of the flexible electrolyte by a thermal transfer printing process.

13. Use of the flexible electrolyte according to claim 11 or the integrated electrode-electrolyte according to claim 12 in the preparation of an ammonia gas electrochemical gas sensor.

14. An ammonia electrochemical gas sensor prepared from the flexible electrolyte according to claim 11, comprising a bottom case, an upper case arranged at top of the bottom case, a rigid support separator arranged inside the bottom case, and the flexible electrolyte arranged on the rigid support separator, wherein upper surface of the flexible electrolyte is provided with a working electrode, and lower surface of the flexible electrolyte is provided with a counter electrode alone or with a counter electrode and a reference electrode simultaneously, the upper case, the rigid support separator and the bottom case are each provided with a conductive through hole, the working electrode is connected with an electrode welding sheet through a wire, and top of the upper case is provided with a dustproof film.
